# EUROPEAN PATENT APPLICATION

(11) **EP 4 607 327 A1**
(43) Date of publication of application: **27.08.2025**
(21) Application number: 23878845.9
(22) Date of filing: 05.09.2023
(51) Int. Cl.: G06F 3/0482

(54) **CONTENT SHARING METHOD AND APPARATUS, DEVICE, AND STORAGE MEDIUM**

(30) Priority: 18.10.2022 CN 202211275412
(71) Applicant: Beijing Zitiao Network Technology Co., Ltd., Beijing 100190 (CN)
(72) Inventor: WANG, Ruoxi, Beijing 100028 (CN); ZHANG, Kai, Beijing 100028 (CN); GUO, Yao, Beijing 100028 (CN)
(74) Representative: Marks & Clerk LLP
(86) International application number: PCT/CN2023/117031
(87) International publication number: WO 2024/082850

(57) **Abstract**

The embodiments of the disclosure provide methods, apparatuses, devices and a storage medium for content sharing. The method includes: presenting a panel for sharing target content, the panel displaying a list of objects to which the target content can be shared; detecting a selection of an object in the list of objects based on an activated selection mode of a plurality of selection modes; in response to detecting a selection operation on at least one of the list of objects, sharing the target content to the at least one object; and providing a control for supporting sending a message to the at least one object while maintaining the presentation of the panel. In this way, the efficiency and flexibility of content sharing can be improved, diversified demands in a sharing scene are met, and user experience is improved.

## Description

This application claims the benefit of Chinese Patent Application No. 202211275412.7, filed on October 18, 2022, and entitled "METHOD, APPARATUS, DEVICE, AND STORAGE MEDIUM FOR CONTENT SHARING", the entire content of which is incorporated herein by reference.

### FIELD

Example embodiments of the present disclosure generally relate to the field of computers, and in particular, to methods, apparatuses, devices, and computer-readable storage media for content sharing.

### BACKGROUND

Currently, more and more applications are designed to provide various services to users. For example, a user may browse, comment on, and repost various types of content in an application, including multimedia content, such as videos, images, image sets, sounds, and the like. In applications with social features, users typically also share content with friends that they or their friends like or find interesting.

### SUMMARY

In a first aspect of the present disclosure, a method for content sharing is provided. The method comprises presenting a panel for sharing target content, the panel displaying a list of objects to which the target content can be shared; detecting a selection of an object in the list of objects based on an activated selection mode of a plurality of selection modes; in response to detecting a selection operation on at least one of the list of objects, sharing the target content to the at least one object; and providing a control for supporting sending a message to the at least one object while maintaining the presentation of the panel.

In a second aspect of the present disclosure, an apparatus for content sharing is provided. The apparatus comprises: a panel presenting module configured to present a panel for sharing target content, the panel displaying a list of objects to which the target content can be shared; a selection detection module configured to detect a selection of an object in the list of objects based on an activated selection mode in a plurality of selection modes; a content sharing module configured to, in response to detecting a selection operation on at least one of the list of objects, share the target content to the at least one object; and a control providing module configured to provide a control for supporting sending a message to the at least one object while maintaining the presentation of the panel.

In a third aspect of the present disclosure, an electronic device is provided. The electronic device comprises at least one processing unit; and at least one memory coupled to the at least one processing unit and storing instructions for execution by the at least one processing unit. The instructions, when executed by the at least one processing unit, cause the electronic device to perform the method of the first aspect.

In a fourth aspect of the present disclosure, a computer-readable storage medium is provided. The computer-readable storage medium has a computer program stored thereon, and the computer program, when executed by a processor, implements the method of the first aspect.

It should be understood that the content described in this summary section is not intended to limit the key features or important features of the embodiments of the present disclosure, nor is it intended to limit the scope of the present disclosure. Other features of the present disclosure will become apparent from the following description.

### BRIEF DESCRIPTION OF THE DRAWINGS

The above and other features, advantages, and aspects of various embodiments of the present disclosure will become more apparent from the following detailed description in conjunction with the accompanying drawings. In the drawings, the same or similar reference signs refer to the same or similar elements, in which:
FIG. 1 illustrates a schematic diagram of an example environment in which embodiments of the present disclosure can be implemented;
FIG. 2 illustrates a flowchart of a process for content sharing according to some embodiments of the present disclosure;
FIG. 3 illustrates a schematic diagram of an example page according to some embodiments of the present disclosure;
FIG. 4A to FIG. 4C illustrate schematic diagrams of examples of a panel according to some embodiments of the present disclosure;
FIG. 5A to FIG. 5B illustrate schematic diagrams of examples of a panel according to some other embodiments of the present disclosure;
FIG. 6A to FIG. 6B illustrate schematic diagrams of examples of a panel according to some other embodiments of the present disclosure;
FIG. 7A to FIG. 7B illustrate schematic diagrams of examples of a panel according to some other embodiments of the present disclosure;
FIG. 8A to FIG. 8E illustrate schematic diagrams of examples of a panel according to some other embodiments of the present disclosure;
FIG. 9A to FIG. 9E illustrate schematic diagrams of examples of a panel according to some other embodiments of the present disclosure;
FIG. 10A to FIG. 10B illustrate schematic diagrams of examples of a panel according to some other embodiments of the present disclosure;
FIG. 11A to FIG. 11B illustrate schematic diagrams of examples of a panel according to some other embodiments of the present disclosure;
FIG. 12A to FIG. 12D illustrate schematic diagrams of examples of a panel according to some other embodiments of the present disclosure;
FIG. 13A to FIG. 13D illustrate schematic diagrams of examples of a panel according to some other embodiments of the present disclosure;
FIG. 14A to FIG. 14D illustrate schematic diagrams of examples of a panel according to some other embodiments of the present disclosure;
FIG. 15 illustrates a block diagram of an apparatus for content sharing according to some embodiments of the present disclosure; and
FIG. 16 illustrates an electronic device in which one or more embodiments of the present disclosure may be implemented.

### DETAILED DESCRIPTION

The embodiments of the present disclosure will be described in more detail below with reference to the accompanying drawings. Although some embodiments of the present disclosure are illustrated in the drawings, it should be understood that the present disclosure can be implemented in various forms and should not be construed as being limited to the embodiments set forth herein. Rather, these embodiments are provided for a more thorough and complete understanding of the present disclosure. It should be understood that the drawings and the embodiments of the present disclosure are provided for illustrative purposes only and are not intended to limit the scope of protection of the present disclosure.

In the description of the embodiments of the present disclosure, the term "including" and the like should be understood as non-exclusive inclusion, that is, "including but not limited to". The term "based on" should be understood as "based at least in part on" The term "an embodiment" or "the embodiment" should be understood as "at least one embodiment". The term "some embodiments" should be understood as "at least some of the embodiments". Other explicit and implicit definitions may also be included below.

Herein, unless explicitly stated, "in response to A" performing a step is not intended that this step is performed immediately after "A", but may include one or more intermediate steps.

It is to be understood that the data involved in the technical solution, including but not limited to the data itself, the obtaining or use of the data, should comply with the requirements of corresponding laws and regulations and relevant provisions.

It is to be understood that, before using the technical solutions disclosed in the various embodiments of the present disclosure, the user shall be informed of the type, the scope of use, and use scenarios and so on of personal information involved in the present disclosure in an appropriate manner in accordance with relevant laws and regulations, and the user's authorization shall be obtained.

For example, in response to receiving an active request from a user, prompt information is sent to the user to explicitly prompt the user that an operation requested by the user will require to obtain and use personal information of the user, so that the user can autonomously select, according to the prompt information, whether to provide the personal information to software or hardware, such as an electronic device, an application program, a server, or a storage medium that performs the operations of the technical solutions of the present disclosure.

As an optional but non-limiting implementation, in response to receiving an active request of the user, the prompt information is sent to the user, for example, in the form of a pop-up window, in which the prompt information may be presented in the form of text. In addition, the pop-up window may further carry a selection control for the user to select "agree" or "not agree" to provide the personal information to the electronic device.

It should be understood that the above process for notifying and obtaining the user's authorization is merely illustrative, and do not limit the implementations of the present disclosure, and other approaches that meet the relevant laws and regulations may also be applied to the implementations of the present disclosure.

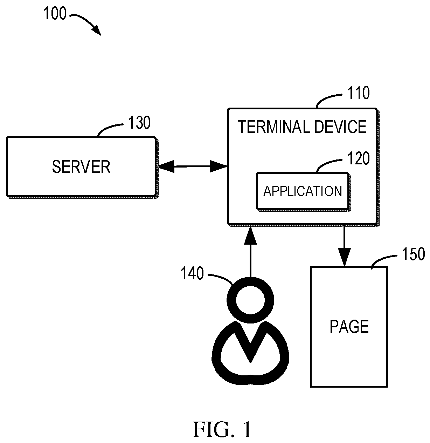

FIG. 1 illustrates a schematic diagram of an example environment 100 in which embodiments of the present disclosure can be implemented. In this example environment 100, an application 120 is installed in a terminal device 110. A user 140 may interact with the application 120 via the terminal device 110 and / or an attached device of the terminal device 110. The application 120 may be a content sharing application capable of providing the user 140 with various services related to the media content, including browsing, commenting, reposting, creation (e.g., shooting and / or editing), posting, etc. of the content. As used herein, "media content" includes one or more types of content, for example, videos, images, animated images, image sets, audios, texts, and the like.

In the environment 100 of FIG. 1, if the application 120 is active, the terminal device 110 may present a page 150 of the application 120. The page 150 may include various pages that can be provided by the application 120, such as a content presentation page, a content creation page, a content posting page, a message page, a personal homepage, and so forth. The application 120 may provide a content browsing function to browse various types of content posted in the application 120. The application 120 may also provide content creation function, including shooting, uploading, editing, and / or posting media content.

In some embodiments, the terminal device 110 communicates with the server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an e-book device, a gaming device, or any combination of the foregoing, including accessories and peripherals of these devices, or any combination thereof. In some embodiments, the terminal device 110 can also support any type of interface for a user (such as, "wearable" circuitry, and so on). The server 130 may be, for example, various types of computing systems/servers capable of providing computing capabilities, including, but not limited to, mainframes, edge computing nodes, computing devices in a cloud environment, and the like.

It should be understood that the structures and functionalities of various elements in the environment 100 are described for illustrative purposes only, and do not imply any limitation to the scope of the present disclosure.

When browsing content, a user may desire to share some content to other users. The current content sharing function may display a panel including a list of users to which can be shared. Content is shared by clicking on a user's avatar. However, after clicking and completing the content sharing, the panel is collapsed. The user cannot perform further operations, for example, sending a message to a friend about the shared content. The user often needs to reopen a chat window with a certain friend to further send a message. In addition, current content sharing often can only be a single sharing with a single friend by default. If it is also desired to share the same content to more friends, the user needs to continue to operate to open the panel for friend selection. As a result, such a content sharing process leads to cumbersome operations and a low sharing efficiency to the user, and fails to meet the diversified requirements of the user in different sharing scenarios, resulting in a poor user experience.

According to embodiments of the present disclosure, an improved solution for content sharing is provided. In this solution, different selection modes regarding sharing objects are provided in the panel. A selection of an object in a list of objects to be shared with is detected according to an activated selection mode. Different selection modes correspond to different ways of selection of objects. If a selection of one or more objects is detected, the target content is shared to the selected objects. Further, while maintaining the presentation of the panel, a control for supporting sending a message to the object is provided. According to the solution, a flexible selection of an object to be shared with can be supported. In addition, sending a message to an object to which content has been shared is also supported in the panel. In this way, the efficiency and flexibility of content sharing can be improved, diversified demands in a sharing scene are met, and user experience is improved.

Some example embodiments of the present disclosure will continue to be described below with reference to the accompanying drawings.

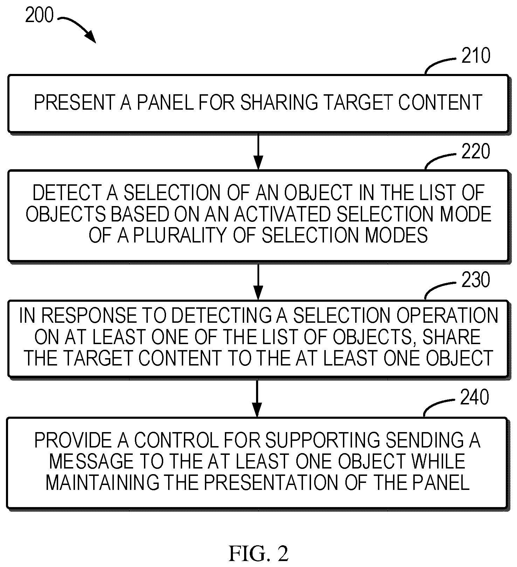

FIG. 2 illustrates a flowchart of a process 200 for content sharing according to some embodiments of the present disclosure. The process 200 may be implemented at the terminal device 110. For the purpose of discussion, the process 200 will be described with reference to the environment 100 shown in FIG. 1.

At block 210, the terminal device 110 presents a panel for sharing a target content, and the panel displays a list of objects to which the target content can be shared.

In some embodiments, the application 120 is installed on the terminal device 110, which can provide functions, such as content browsing, content sharing, messaging between users, and the like. The presentation of the panel for sharing content may be based on detecting a trigger of a sharing function for the target content. For example, a user is detected to trigger the sharing function, while the target content is being browsed or selected.

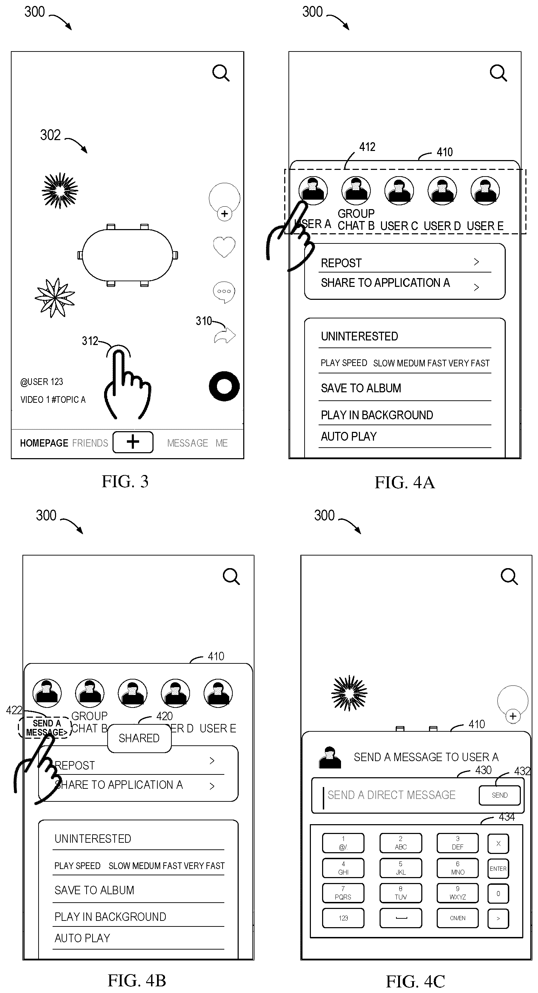

To better understand the example embodiments, it will be described below with reference to an example page of an application. FIG. 3 illustrates an example page 300 of the application 120. Target content 302, such as video, is presented in the page 300. An entry for triggering a sharing function for the target content 302 may also be provided in the page 300.

For example, the page 300 further includes a sharing control 336, and the presentation of the panel for sharing the target content 302 may be triggered by clicking on the sharing control 336. In some embodiments, a predetermined gesture operation for the target content may also be provided to trigger the presentation of the panel. For example, in the example of FIG. 3, the presentation of the panel may be triggered by a long-press gesture operation 312 in the display region of the target content 302.

It should be understood that the page 300 in FIG. 3 and pages in other figures to be described below are merely example pages, and various page designs may actually exist. Individual graphical elements on a page may have different arrangements and different visual representations, one or more of which may be omitted or replaced, and one or more other elements may also be present. Embodiments of the present disclosure are not limited in this respect.

The panel for sharing content may present a list of objects for selecting objects to share with. As used herein, "object" refers to any entity that can share content. The objects for content sharing may be at a granularity of a user, or of a group, where a group may include a plurality of members. The list of objects may include any object associated with the current user that the content can be shared with, for example, may include other users followed by the current user, friend users mutually following with the current user, creating a group for sending a message, and so on. Embodiments of the present disclosure are not limited in this respect.

The panel for sharing content may be referred to as different terms in different applications or scenarios, such as a sharing panel, a long-press panel, an operational panel, an interactive panel, and the like. In some embodiments, in addition to the content sharing function, the panel may provide other functions. The panel supports the user's triggering of various functions, including the sharing function. The list of objects and other functions may be organized or arranged differently in the panel. In some embodiments, the panels for content sharing triggered via different entries may provide different functions or function arrangements.

Some example panels are illustrated in FIGs. 4A, 5A, 6A, and 7A, respectively. Note that in addition to these examples, other panels may be designed depending on the application and needs.

FIG. 4A illustrates an example panel 410 in which a list of objects 412 is displayed. The list of objects 412 displays the avatars and / or names of respective objects in the form of a horizontal list, and these objects may be individual users, group chats, etc. in the application. The selection of the object may be implemented by clicking on the avatar and / or name of the object. In some embodiments, it may be allowed to present more selectable objects by dragging the list of objects 412 or by other manners.

In addition to the list of objects, other functions may be provided in the presented panel, for example a reposting function for reposting the target content to a feed of the current user; a cross-application sharing function, such as "Share to Application A," to support sharing the target content to other applications (such as "Application A"). A playing setting or other related settings for the target content may also be provided in the panel 410, and FIG. 4A only lists some non-limiting examples.

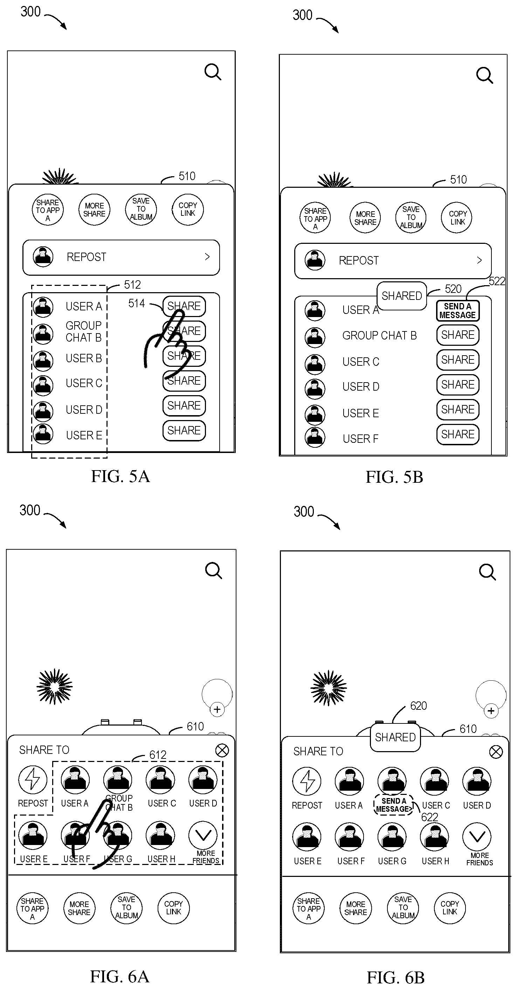

FIG. 5A illustrates another example panel 510 in which a list of objects 512 is displayed. The list of objects 512 displays the avatars and / or the names of respective objects in the form of a vertical list, and these objects may be individual users, group chats, etc. in the application. In this example, a sharing control 514 is displayed in association with various objects in the list of objects 512. Through a trigger operation on the sharing control 514, for example, clicking on the sharing control 514, the selection of an associated object and content sharing may be implemented. In some embodiments, it may be allowed to present more selectable objects by scrolling the list of objects 512 or by other manners. Similar to the example of FIG. 4A, in addition to the list of objects, other functions may be provided in the panel, and these functions may have different arrangements.

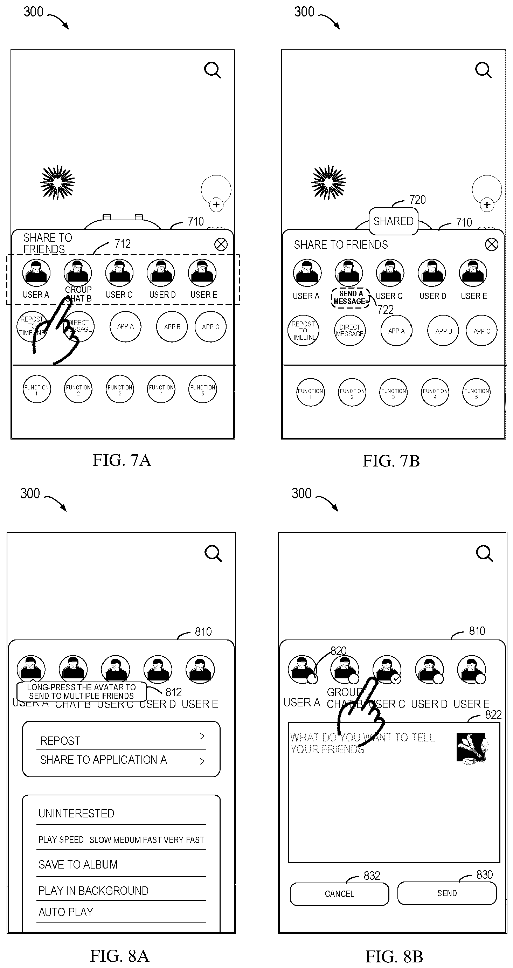

FIGs. 6A and 7A illustrate further example panels 610 and 710, respectively, and a list of objects 612 and a list of objects 712 are also illustrated in these two examples, respectively. These examples are used to display different panel layouts.

At block 220, the terminal device 110 detects a selection of an object in the list of objects based on an activated selection mode in a plurality of selection modes. In the embodiments of the present disclosure, different selection modes for the list of objects are supported to facilitate flexible selection of the object to share with.

In some embodiments, the plurality of selection modes includes a single selection mode and a multi-selection mode. A selection of a single object in the list of objects is allowed in the single selection mode, while a section of multiple objects is not supported. The user can quickly complete content sharing of a particular object. A selection of more than one object in the list of objects is allowed in the multiple selection mode, to support the user to quickly and efficiently share the same content to multiple objects. In some embodiments, as will be shown below, it is also permissible if the user selects only a single object for content sharing in the multi-selection mode.

Different selection modes will be discussed below in connection with examples of the drawings.

At block 230, in response to detecting a selection operation on at least one of the list of objects, the terminal device 110 shares the target content to the at least one object. In addition, at block 240, the terminal device 110 provides a control for supporting sending a message to the at least one object while maintaining the presentation of the panel.

In the embodiments of the present disclosure, while content sharing is performed, it is also allowed to continue to conveniently send a message to the object to whom the content has been shared in the panel. For example, when the user shares content to the friend, it may also be desirable to be able to attach an accompanying message to share his or her feelings, reasons for sharing, and so on. Providing such a messaging function without folding the panel may extend the sharing operation function and support efficient interaction of users.

The control for supporting sending a message to at least one object may be implemented in a variety of forms. In some embodiments, at least one message entry control may be provided in the panel in association with the at least one object to share with. Sending a message to the associated object may be supported by triggering the message entry control. For example, in response to detecting a trigger operation on the message entry control, a message input control may be further provided, and message input control is configured to receive an input of a message. In some examples, the message input control may include a message input box for receiving the input of the message. In some examples, in a case where the message input control is triggered, an input keyboard or other input tool may be invoked to support the input of the message.

In some embodiments, because the message entry control is to be triggered for message input, sharing of the target content may be separate from the input or sending of the message. That is, after detecting the selection of the one or more objects, the target content may be first shared to the selected objects, and the message entry control is provided. If a trigger operation on the message entry control is subsequently detected and a message input is received, the received message is sent to the corresponding object.

FIG. 4B, FIG. 5B, FIG. 6B, and FIG. 7B illustrate some examples of the message entry control, respectively.

It is assumed that a selection operation on "User A" is detected in FIG. 4A, for example, a click operation on an avatar of "User A" is detected, the target content 302 is shared to "User A". As illustrated in FIG. 4B, a prompt 420 may be displayed to indicate that the content has been shared. Further, the message entry control 422 is displayed in association with "User A". Note that the specific control names shown in the drawings are merely examples, which may be labeled with other names, icons, etc., as long as the corresponding functions can be implemented.

By clicking on the message entry control 422, the presentation of the message input control may be triggered As shown in FIG. 4C, a message input box 430 is provided in the panel 410. A message input by the user may be received in the message input box 430. For example, if a trigger for the message input box 430 is detected, a keyboard 434 may also be invoked and presented to support message input. If a message sending operation is detected, for example, a trigger operation on a sending control 432 in FIG. 4C is detected, the message received in the message input box 430 may be sent to the associated object, which is the "User A" in this example.

It is assumed that a selection operation on a sharing control 514 associated with "User A" is detected in FIG. 5A, for example, a click operation on the sharing control is detected, the target content 302 is shared to "User A". As illustrated in FIG. 5B, a prompt 520 may be displayed to indicate that the content has been shared. In addition, the sharing control 514 associated with "User A" may be switched to a message entry control 522. The triggering of the message entry control and the subsequent message input are similar to the example of FIG. 4B. Similarly, in the examples of FIGs. 6B and 7B, similar message entry controls 622, 722 and prompts 620, 720 indicating that the content has been shared may also be provided.

In some embodiments, the message entry control may be provided in a case of sharing the target content to a single user. In this way, the target content may be first shared to the object, and then determined whether to continue sending the message depending on the user needs. For example, a user may selectively send messages to certain objects to which the content is shared, while not sending messages to other objects.

In some embodiments, the control for supporting sending a message to at least one object may include a message input control configured to receive an input of a message. That is, instead of providing a message entry control, the message input control may be provided directly to provide the optionality of message entry. In some embodiments, if the activated selection mode is the multi-selection mode, that is, in a case where the target content is shared to a plurality of objects in the multi-selection mode, the message input control is provided to support simultaneous sending of the message to the plurality of objects. In this way, the sharing capability can be enriched, simultaneous interaction with multiple friends can be realized, and the message sending efficiency can be improved.

As previously described, the selection modes may include a single selection mode and a multi-selection mode. In some embodiments, the mode to be activated may be switched by a mode switching operation. For example, the mode switching operation from the single selection mode to the multi-selection mode may include a long-press gesture operation in a predetermined region of the panel, a tap gesture operation in a predetermined region of the panel, and the like. In some embodiments, the predetermined region may include a presentation region of any of the list of objects, for example, a display region of an avatar and / or a name of the object. In the multi-selection mode, objects in the list of objects may be displayed as in a selectable state, e.g., selectable boxes may be presented in association with respective objects, or in any other suitable region.

By detecting selection of selectable boxes, it may be detected whether the user is to select an associated object for sharing. In some embodiments, the single selection mode may be set to the selection mode that is activated by default in the panel, and switched to the multi-selection mode upon detecting a specific mode switching operation. Of course, the reverse setting may also be performed, the multi-selection mode is set to the selection mode that is activated by default, and switched to the single selection mode, upon detecting the specific mode switching operation.

In some embodiments, if the single selection mode is the selection mode that is activated by default, guidance information about the mode switching operation may also be provided to prompt the user how to perform mode switching. Similarly, in the case where the multi-selection mode is the default selection mode, similar guidance information may also be provided.

FIGs. 8A to 11C illustrate the providing of message input control and subsequent embodiments in the multi-selection mode.

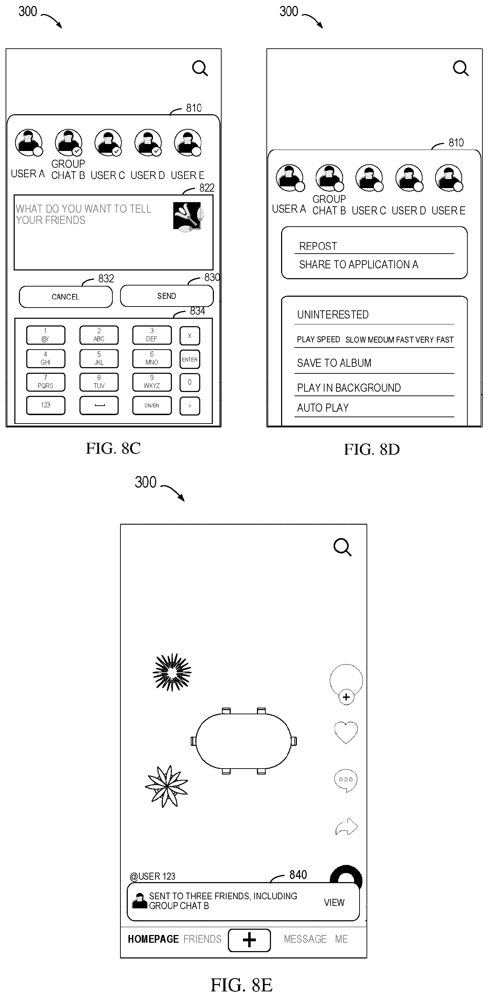

As shown in FIG. 8A, guidance information 812 is provided in the panel 810 (which is similar to the panel 510 in FIG. 5A), to inform the user how to switch to the multi-selection mode. If a mode switching operation on the multi-selection mode is detected, the multi-selection mode is activated, as shown in FIG. 8B. In the multi-selection mode, the user is allowed to select multiple objects for content sharing, although the user may only select one object. Specifically, as shown in FIG. 8B, each object in the list of objects is in the selectable state, and selectable boxes are displayed in a region associated with the avatar of each object. If a check for a selectable box of an object is detected, a selection of the object may be detected. As shown in FIG. 8B, "User C" may be selected. As shown in FIG. 8C, selection of "Group Chat B" and "User D" may also be detected. If a trigger for a message input box 830 is detected, the keyboard 834 may further be invoked and presented to support message input.

In addition, the panel 810 also presents a message input control, for example, the message input box 822, to simultaneously receive input for a message to the objects to which to share. If a trigger operation on the sending control 830 is detected, the target content 302 will be shared to one or more objects currently selected. If there is an input message in the message input box 822, the message is also sent to the object to which the target content is shared.

In some embodiments, the user may also be allowed to cancel the presentation of the message input control, or exit the multi-selection mode. For example, if a trigger operation on the cancel control 832 is detected in FIG. 8B or 8C, the presentation of the message input box 822 may be canceled, as shown in FIG. 8D. In some embodiments, the trigger operation on the cancel control may further cancel the operation on the object that is previously selected. In some embodiments, the trigger operation on the cancel control may further exit the multi-selection mode, and restore the default single select mode.

In some embodiments, if the target content (and in some cases, further comprising the input message) has been sent to corresponding objects, a prompt that the content and / or message has been sent successfully may be provided, such as the prompt 840 in FIG. 8E. In some embodiments, after the target content and / or the message has been sent, the panel for sharing may be collapsed and no longer presented, as shown in the example of FIG. 8E.

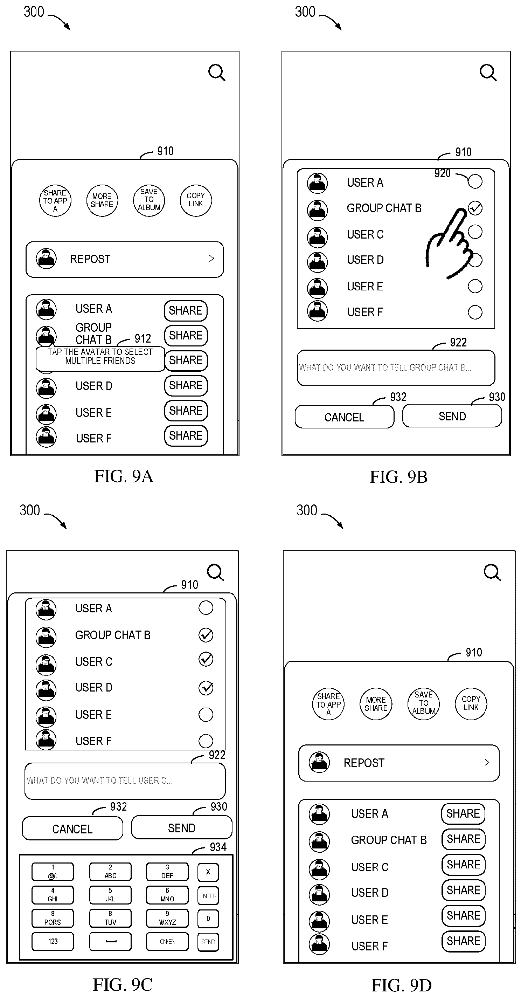

FIG. 9A illustrates the presentation of the multi-selection mode and the message input control in the panel 910 that presents a list of objects in a vertical column. The panel 910 is similar to the panel 510 in FIG. 5A. As shown in FIG. 9A, guidance information 912 for guiding the switch to the multi-selection mode is presented in the panel 910. If the multi-selection mode is detected to be activated, as shown in FIGs. 9B and 9C, the sharing control associated with the object is replaced with a selectable block to allow the user to flexibly edit one or more objects to share with. If a trigger on the message input box 930 is detected, the keyboard 934 may further be invoked and presented to support message input.

If a trigger operation on the cancel control 932 is detected in FIG. 9B or FIG. 9C, the presentation of the message input box 922 may be canceled, as shown in FIG. 9D. In some embodiments, the trigger operation on the cancel control may further cancel the operation on the object that is previously selected. In some embodiments, the trigger operation on the cancel control may further exit the multi-selection mode, and restore the default single selection mode.

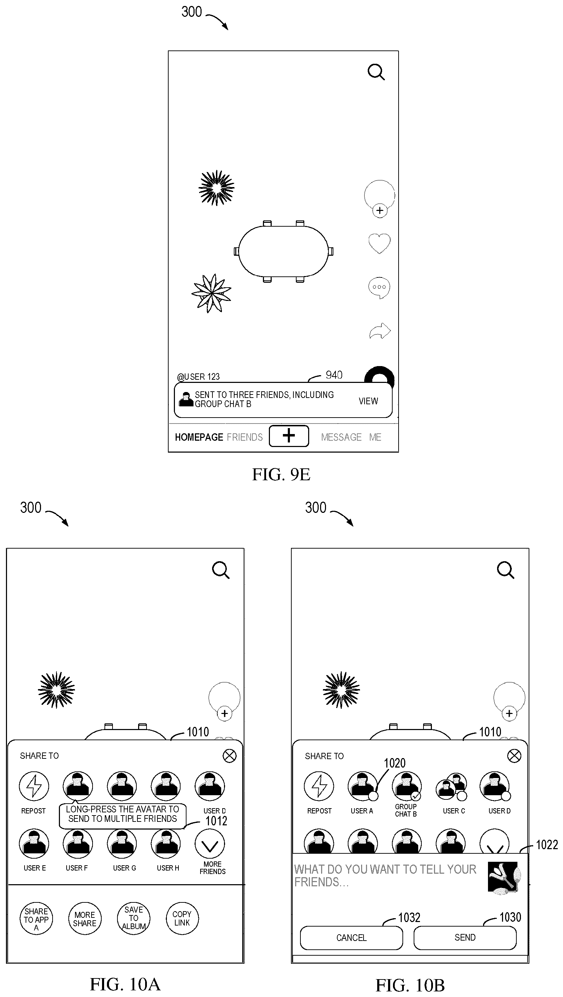

If the target content (and in some cases, further comprising the input message) has been sent to corresponding objects, such as detecting a trigger operation on the sending control 930, a prompt that the content and / or message has been sent successfully may also be provided, such as the prompt 940 in FIG. 9E. In some embodiments, after the target content and / or the message has been sent, the panel may be collapsed and no longer presented, as shown in the example of FIG. 8E.

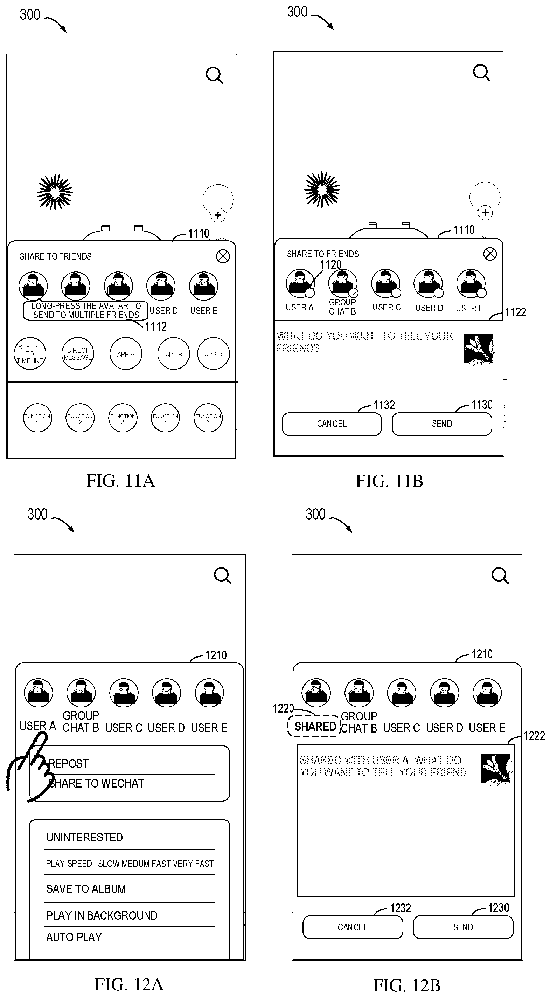

FIG. 10A and FIG. 11A illustrate examples of further panels 1010 and 1110 where the panel 1010 is similar to the panel 610 in FIG. 6A, and the panel 1110 is similar to the panel 710 in FIG. 7A. Similar to the examples in FIG. 8A and FIG. 9A, prompt information 1012 may be presented in the panel 1010, and prompt information 1112 is presented in the panel 1110. Upon detecting the mode switching operation and entering the multi-selection mode, similarly, the selectable boxes 1020, 1120 may be presented in association with various objects in the panels 1010, 1110, and message input boxes 1022, 1122 are provided. In addition, the sending controls 1030 and 1130 are further provided for triggering the sharing of the target content and the sending of the message in the message input box. The cancel controls 1032, 1132 are also provided to cancel the selection of the object, the selection of the message input box, and / or exit the multi-selection mode.

Although not shown in the drawings, in some embodiments, in the single selection mode, the message input control, such as a message input box, may also be provided directly instead of providing the message entry control. In such embodiments, the message input control may be provided in a manner similar to that discussed in FIG. 8A through FIG. 11C.

In the embodiments of FIG. 8A through FIG. 11C, simultaneously sending the target content and the message to the object to share with is shown. In some embodiments, the target content may be separately shared to the plurality of objects, and then the message is sent. In this way, efficiency of sharing tasks can be improved, and messages can also be sent to multiple objects through one-time message editing. In this way, the independence of the sharing task can be maintained, and avoid being tied to the attached message.

Specifically, if the selection operation on the first object is detected, the target content is shared to the first object. If the selection operation on the second object is then detected, the target content is shared to the second object, and so on. The sharing of the target content is separate from the sending of the message. The target content may be shared based on the selection of the object, while the sending of the message may be performed based on the triggering of the message sending operation.

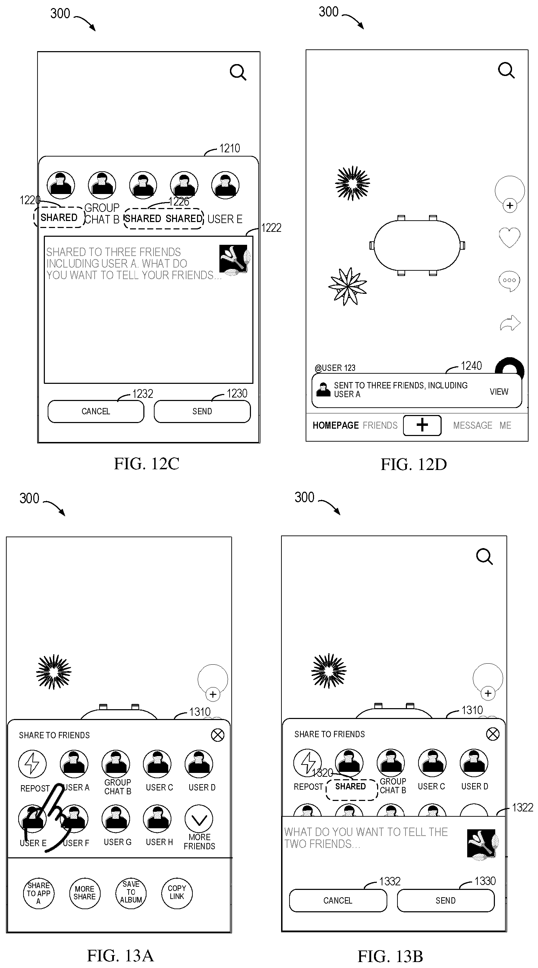

FIG. 12A illustrates an example panel 1210 that is similar to the panel 410 in FIG. 4A. Assuming that the multi-selection mode is activated, if the selection of "User A" is detected, the target content 302 may be shared to "User A". In FIG. 12B, the indication 1220 is presented to prompt that the target content has been shared to user A. In addition, in FIG. 12B, the message input box 1222 may also be provided in the panel 1210. If an input of a message is received in the message input box 1222 and a message sending operation is detected (e.g., a triggering for the sending control 1230), then the message is sent to "User A". In addition, the user is also allowed to continue to select an object to send. As shown in FIG. 12C, as the user selects, the target content 302 may continue to be shared to "User C", "User D", and a corresponding prompt 1226 is presented. In the case that the target content 302 has been shared to multiple objects, if an input of a message is received in the message input box 1222 and a message sending operation is detected (e.g., a trigger for the sending control 1230), then the message is sent to the multiple objects to which the content has been shared, as shown in the prompt 1240 in FIG. 12D. In addition, if a cancel operation is detected, such as a triggering to the cancel control 1232, then the presentation of the message input box 1222 may be canceled.

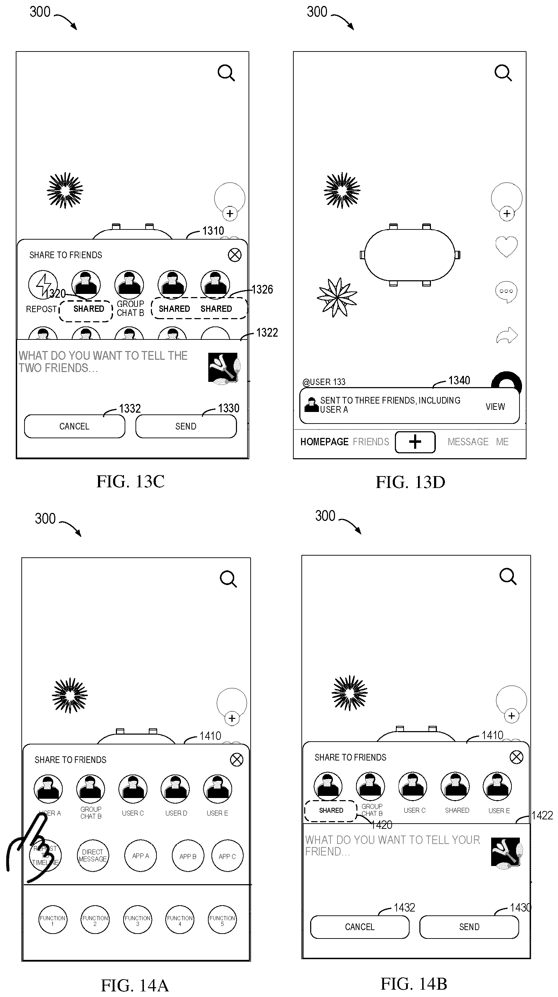

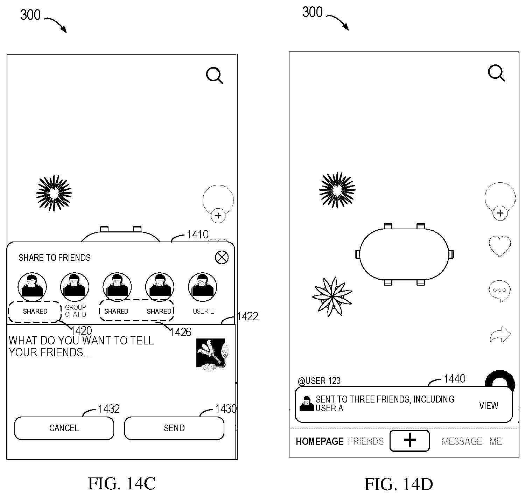

FIG. 13A to FIG. 13D and FIG. 14A to FIG. 14D illustrate example panels 1310, 1410, respectively, similar to FIG. 12A to FIG. 12D, except that examples of panels are different. The panel may also give the indications 1320, 1420 indicating that the target content has been shared, and display message input boxes 1322 and 1326, 1422, and 1426 including associated sending controls 1330, 1430, and cancel controls 1332, 1432. In addition, after the message is sent, the panel may be collapsed and provide the indications 1340, 1440 to indicate the sending of the message. For these examples, details are not described repeatedly.

In some embodiments, as discussed in some embodiments, if the mode exit operation is detected in the multi-selection mode, the multi-selection mode is exited and the single selection mode is activated, referring to the examples in FIG. 8D and FIG. 9D. In the single selection mode, the selection of the list of objects in the panel may continue to be detected. At this point, the selection of a single object may be supported. The manner of sharing content to an object may for example refer to the embodiments in FIG. 4A to FIG. 7B.

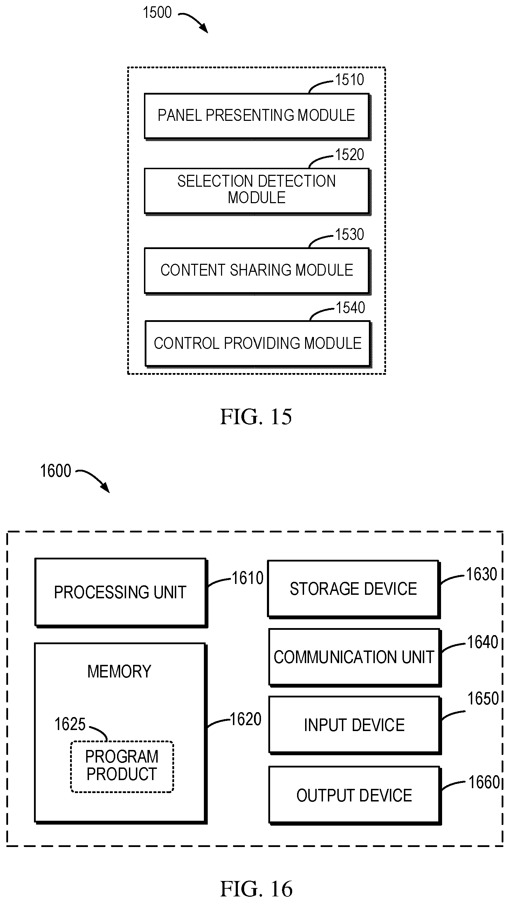

FIG. 15 illustrates a schematic structural block diagram of an apparatus 1500 for content sharing according to some embodiments of the present disclosure. The apparatus 1500 may be implemented or included in the terminal device 110. The various modules / components in the apparatus 1500 may be implemented by hardware, software, firmware, or any combination thereof.

The apparatus 1500 comprises a panel presenting module 1510 configured to present a panel for sharing target content, the panel displaying a list of objects to which the target content can be shared. The apparatus 1500 comprises a selection detection module 1520 configured to detect a selection of an object in the list of objects based on an activated selection mode in a plurality of selection modes. The apparatus 1500 further comprises a content sharing module 1530 configured to, in response to detecting a selection operation on at least one of the list of objects, share the target content to the at least one object. The apparatus 1500 further comprises a control providing module 1540 configured to provide a control for supporting sending a message to the at least one object while maintaining the presentation of the panel.

In some embodiments, the control providing module 1540 comprises a message entry control providing module configured to provide, in the panel, at least one message entry control in association with the at least one object. In some embodiments, the apparatus 1500 further comprises: a message input control providing module configured to in response to detecting a trigger operation of a target message entry control associated with a target object in the at least one object, provide a message input control configured to receive an input of a message; and a first message sending module configured to in response to detecting a message sending operation, send the received message to the target object.

In some embodiments, the control providing module 1540 comprises a message input control providing module configured to provide a message input control configured to receive an input of a message. In some embodiments, the apparatus 1500 further comprises: a second message sending module configured to, in response to detecting a message sending operation, send the received message to the at least one object.

In some embodiments, the message input control providing module is configured to in response to the activated selection mode being a multi-selection mode, provide the message input control.

In some embodiments, the second message sending module is configured to send the message along with the target content to the at least one object.

In some embodiments, the sharing of the target content is separate from the sending of the message.

In some embodiments, the content sharing module 1530 comprises: a first object sharing module, configured to, in response to detecting a selection operation on a first object in the list of objects, share the target content to the first object; and a second object sharing module, configured to, in response to detecting a selection operation on a second object in the list of objects, share the target content to the second object.

In some embodiments, the plurality of selection modes comprises a single selection mode and a multi-selection mode, a selection of a single object in the list of objects is allowed in the single selection mode, and a selection of more than one object in the list of objects is allowed in the multi-selection mode.

In some embodiments, the selection detection module 1520 comprises: a multiple selection activation module configured to in response to detecting a mode switching operation in the single selection mode, activate the multi-selection mode; and a multi-selection selecting module configured to detect the selection of the object in the list of objects based on the multi-selection mode.

In some embodiments, the mode switching operation comprises a long-press gesture operation or a tap gesture operation in a predetermined region of the panel.

In some embodiments, the selection detection module 1520 comprises: a multi-selection exit module configured to in response to detecting a mode exit operation in the multi-selection mode, exit the multi-selection mode; and a single selection activation mode configured to in response to detecting the mode exit operation in the multi-selection mode, activate the single selection mode; and a single selection selecting module configured to detect a selection of an object in the list of objects based on the single-selection mode.

FIG. 16 illustrates a block diagram of an electronic device 1600 in which one or more embodiments of the present disclosure may be implemented. It should be understood that the electronic device 1600 in FIG. 16 is shown for merely illustrative purpose, and should not limit the functionality and scope of the embodiments described herein. The electronic device 1600 shown in FIG. 16 may be configured to implement the terminal device 110 in FIG. 1 or the apparatus 1700 shown in FIG. 17.

As shown in FIG. 16, the electronic device 1600 is in the form of a general-purpose computing device. Components of the electronic device 1600 may include, but are not limited to, one or more processors or processing units 1610, a memory 1620, a storage device 1630, one or more communications units 1640, one or more input devices 1650, and one or more output devices 1660. The processing unit 1610 may be a physical or virtual processor and can perform various processing according to a program stored in the memory 1620. In a multiprocessor system, a plurality of processing units executes computer executable instructions in parallel, so as to improve the parallel processing capability of the electronic device 1600.

The electronic device 1600 typically includes a plurality of computer storage medium. Such media may be any available media that are accessible by the electronic device 1600, including, but not limited to, volatile and non-volatile media, removable and non-removable media. The memory 1620 may be a volatile memory (e.g., a register, cache, random access memory (RAM)), non-volatile memory (e.g., read-only memory (ROM), electrically erasable programmable read-only memory (EEPROM), flash memory), or some combination thereof. The storage device 1630 may be a removable or non-removable medium and may include a machine-readable medium, such as a flash drive, a magnetic disk, or any other medium that can be used to store information and/or data (e. g., training data for training) and that can be accessed within the electronic device 1600.

The electronic device 1600 may further include additional detachable/undetachable, volatile/nonvolatile storage medium. Although not shown in FIG. 16, a magnetic disk drive for reading from or writing to a detachable, nonvolatile magnetic disk, such as a "floppy disk" and an optical disk drive for reading from or writing to a detachable, nonvolatile optical disk may be provided. In these cases, each drive may be connected to a bus (not shown) by one or more data media interfaces. The memory 1620 may include a computer program product 1625 having one or more program modules configured to perform various methods or actions of various embodiments of the present disclosure.

The communication unit 1640 implements communication with other electronic devices through a communication medium. Additionally, functions of components of the electronic device 1600 may be implemented by a single computing cluster or a plurality of computing machines, and these computing machines can communicate through a communication connection. Thus, the electronic device 1600 may operate in a networked environment using logical connections to one or more other servers, network personal computers (PCs), or another network node.

The input device 1650 may be one or more input devices, such as a mouse, a keyboard, a trackball, etc. The output device 1660 may be one or more output devices, such as a display, a speaker, a printer, etc. The electronic device 1600 may also communicate with one or more external devices (not shown), such as a storage device, a display device, or the like through the communication unit 1640 as desired, and communicate with one or more devices that enable a user to interact with the electronic device 1600, or communicate with any device (e.g., a network card, a modem, or the like) that enables the electronic device 1600 to communicate with one or more other electronic devices. Such communication may be performed via an input/output (I/O) interface (not shown).

According to an example implementation of the present disclosure, a computer readable storage medium is provided, on which computer-executable instructions is stored, wherein the computer-executable instructions are executed by a processor to implement the method described above. According to an example implementation of the present disclosure, a computer program product is also provided, which is tangibly stored on a non-transitory computer readable medium and includes computer-executable instructions that are executed by a processor to implement the method described above.

Aspects of the present disclosure are described herein with reference to flowcharts and/or block diagrams of methods, apparatus, devices and computer program products implemented in accordance with the present disclosure. It should be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, when executed via the processing unit of the computer or other programmable data processing apparatus, create means for implementing the functions/actions specified in one or more blocks of the flowcharts and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture that includes instructions which implement various aspects of the functions/actions specified in one or more blocks of the flowcharts and/or block diagrams.

The computer readable program instructions may be loaded onto a computer, other programmable data processing apparatus, or other devices, causing a series of operational steps to be performed on the computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is example, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method for content sharing, comprising:
presenting a panel for sharing target content, the panel displaying a list of objects to which the target content can be shared;
detecting a selection of an object in the list of objects based on an activated selection mode of a plurality of selection modes;
in response to detecting a selection operation on at least one of the list of objects, sharing the target content to the at least one object; and
providing a control for supporting sending a message to the at least one object while maintaining the presentation of the panel.

2. The method of claim 1, wherein providing the control for supporting sending the message to the at least one object comprises:
providing, in the panel, at least one message entry control in association with the at least one object; and
wherein the method further comprises:
in response to detecting a trigger operation of a target message entry control associated with a target object in the at least one object, providing a message input control configured to receive an input of a message; and
in response to detecting a message sending operation, sending the received message to the target object.

3. The method of claim 1, wherein providing the control for supporting sending the message to the at least one object comprises:
providing a message input control configured to receive an input of a message; and
the method further comprises:
in response to detecting a message sending operation, sending the received message to the at least one object.

4. The method of claim 3, wherein providing the message input control further comprises:
in response to the activated selection mode being a multi-selection mode, providing the message input control.

5. The method of claim 3, wherein sending the received message to the at least one object comprises:
sending the message along with the target content to the at least one object.

6. The method of claim 3, wherein the sharing of the target content is separate from the sending of the message.

7. The method of claim 1, wherein sharing the target content to the at least one object comprises:
in response to detecting a selection operation on a first object in the list of objects, sharing the target content to the first object; and
in response to detecting a selection operation on a second object in the list of objects, sharing the target content to the second object.

8. The method of claim 1, wherein the plurality of selection modes comprises a single selection mode and a multi-selection mode, a selection of a single object in the list of objects is allowed in the single selection mode, and a selection of more than one object in the list of objects is allowed in the multi-selection mode.

9. The method of claim 8, wherein detecting the selection of the object in the list of objects based on the activated selection mode comprises:
in response to detecting a mode switching operation in the single selection mode, activating the multi-selection mode; and
detecting the selection of the object in the list of objects based on the multi-selection mode.

10. The method of claim 9, wherein the mode switching operation comprises a long-press gesture operation or a tap gesture operation in a predetermined region of the panel.

11. The method of claim 8, wherein detecting the selection of the object in the list of objects based on the activated selection mode comprises:
in response to detecting a mode exit operation in the multi-selection mode,
exiting the multi-selection mode, and
activating the single selection mode; and
detecting the selection of the object in the list of objects based on the single selection mode.

12. An apparatus for content sharing, comprising:
a panel presenting module configured to present a panel for sharing target content, the panel displaying a list of objects to which the target content can be shared;
a selection detection module configured to detect a selection of an object in the list of objects based on an activated selection mode in a plurality of selection modes;
a content sharing module configured to, in response to detecting a selection operation on at least one of the list of objects, share the target content to the at least one object; and
a control providing module configured to provide a control for supporting sending a message to the at least one object while maintaining the presentation of the panel.

13. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 11.

14. A computer readable storage medium having a computer program stored thereon, wherein the computer program, when executed by a processor, implements the method of any of claims 1 to 11.
